# EUROPEAN PATENT APPLICATION

(11) **EP 1 498 277 A1**
(43) Date of publication of application: **19.01.2005**
(21) Application number: 04002590.0
(22) Date of filing: 05.02.2004
(51) Int. Cl.: B41M 3/00, B41J 3/407

(54) **Ink-jettable reactive polymer systems for free-form fabrication of solid three dimensional objects**

(30) Priority: 18.07.2003 US 623005
(71) Applicant: Hewlett-Packard Development Company, L.P., Houston, Texas 77070 (US)
(72) Inventor: Kramer, Laura, Corvallis OR 97330 (US); Kasperchik, Vladek P., Corvallis OR 97330 (US); Lambright, Terry M., Corvallis OR 97330 (US); Boyd, Melissa D., Corvallis OR 97330 (US)
(74) Representative: Schoppe, Fritz, Dipl.-Ing.

(57) **Abstract**

The present invention is drawn toward systems and methods for free-form fabrication of solid three-dimensional objects. In one embodiment, a method can comprise a) ink-jetting a first ink-jettable composition (16) containing a reactive build material and a second ink-jettable composition (18) containing a curing agent separately onto a substrate (22) such that contact between the reactive build material and the curing agent occurs, thereby resulting in a reaction that forms a hardening composition (24) without requiring ultraviolet curing, and b) repeating the ink-jetting step such that multiple layers of hardening composition are accrued, wherein said multiple layers are successively bound to one another to form the solid three-dimensional object.

## Description

### FIELD OF THE INVENTION

The present invention is drawn toward the production of solid three-dimensional objects, such as for prototyping applications. More particularly, the present invention is drawn toward the use of two or more ink-jettable compositions that react with one another when combined, and which can be accrued to form three-dimensional objects.

### BACKGROUND OF THE INVENTION

Printing technologies can be used to create three-dimensional objects from data output of a computerized modeling source. For example, one can design a three-dimensional object using a computer program, and the computer can output the data of the design to a printing system capable of forming the solid three-dimensional object.

Ink-jet printers typically use ink-jet pens to deposit various types of material onto substrates. Ink-jet pens typically require that the material to be jetted have a low viscosity such that the material can be accurately jetted while retaining good pen reliability. Heat is sometimes applied to the jetted material in order to lower its viscosity into a jettable range. In the case of printing three-dimensional objects, an object created by the jetted material, once solidified, should be sufficiently rigid in order to maintain its shape. Therefore, the jetted material generally must undergo some sort of solidifying after being jetted from the printer.

Previous methods of three-dimensional printing have used ultraviolet curing to solidify and cure a three-dimensional structure after jetting it from the printer. In such methods, the ink-jetted material contains a photo-reactive material that reacts upon exposure to ultraviolet energy, thereby resulting in a solidified composition. The use of ultraviolet curing poses some limitations, however. Some dyes which might be used to color an object can absorb ultraviolet energy and inhibit the solidifying and curing process. Many dyes can also be substantially destroyed due to ultraviolet irradiation. This can limit the types of dyes used in three-dimensional printing. Furthermore, photo-reactive material can react prematurely over extended storage times, upon exposure to ambient light, or due to heat applied during the jetting process. For example, some higher molecular weight materials that need to be heated extensively to lower their viscosity may not be available for use because the heat applied can cause premature solidifying. Limiting the use of higher molecular weight materials can limit certain mechanical properties of the solid three-dimensional object being printed.

### SUMMARY OF THE INVENTION

It has been recognized that certain systems, methods, and composition components can be used for free-form fabrication of solid three-dimensional objects. Specifically, a method for free-form fabrication of a solid three-dimensional object can comprise steps of a) ink-jetting a first ink-jettable composition containing a reactive build material and a second ink-jettable composition containing a curing agent separately onto a substrate such that the reactive build material and the curing agent contact and react to form a solidifying composition, and b) repeating the ink-jetting step such that multiple layers of the solidifying composition are accrued, wherein each of the multiple layers is bound to one another to form the solid three-dimensional object.ln another embodiment, a system for free-form fabrication of solid three-dimensional objects can comprise a first ink-jettable composition including a reactive build material and a second ink-jettable composition including a curing agent. The reactive build material and the curing agent can be configured to react with one another after contact to form a solidifying composition. The solidifying composition can be configured to become chemically bound to subsequently applied solidifying compositions. The system can further comprise an ink-jet dispensing system configured for separately containing and dispensing the first ink-jettable composition and the second ink-jettable composition, wherein upon dispensing, the first ink-jettable composition and the second ink-jettable composition are configured to come in contact.

In another embodiment, a solid three-dimensional object can comprise multiple layers of a solidifying composition bound to one another, wherein each layer is formed by contacting a first ink-jettable liquid composition containing a reactive build material with a second ink-jettable liquid composition containing a curing agent. The curing agent can be reactive with the reactive build material such that the solidifying composition forms.

Additional features and advantages of the invention will be apparent from the detailed description that follows, which illustrates, by way of example, features of the invention.

### BRIEF DESCRIPTION OF THE DRAWINGS

FIGS. 1A and 1B provide a schematic representation of a free-form fabrication system in accordance with an embodiment of the present invention; and
FIGS. 2A and 2B provide a schematic representation of an alternative free-form fabrication system in accordance with an embodiment of the present invention.

### DETAILED DESCRIPTION OF THE PREFERRED EMBODIMENT(S)

Before the present invention is disclosed and described, it is to be understood that this invention is not limited to the particular process steps and materials disclosed herein because such process steps and materials may vary somewhat. It is also to be understood that the terminology used herein is used for the purpose of describing particular embodiments only. The terms are not intended to be limiting because the scope of the present invention is intended to be limited only by the appended claims and equivalents thereof.

It must be noted that, as used in this specification and the appended claims, the singular forms "a," "an," and "the" include plural referents unless the context clearly dictates otherwise.

Viscosities, temperatures, ratios, concentrations, amounts, molecular sizes, and other numerical data may be expressed or presented herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "about 0.1 wt% to about 5 wt%" should be interpreted to include not only the explicitly recited concentration of about 0.1 wt% to about 5 wt%, but also include individual concentrations and the sub-ranges within the indicated range. Thus, included in this numerical range are individual concentrations such as 1 wt%, 2 wt%, 3 wt%, and 4 wt%, and sub-ranges such as from 0.1 wt% to 1.5 wt%, 1 wt% to 3 wt%, from 2 wt% to 4 wt%, from 3 wt% to 5 wt%, etc. This same principle applies to ranges reciting only one numerical value. For example, a range recited as "less than about 5 wt%" should be interpreted to include all values and sub-ranges between 0 wt% and 5 wt%. Furthermore, such an interpretation should apply regardless of the breadth of the range or the characteristics being described.

As used herein, liquid vehicle" refers to the liquid fluid that can be prepared for jetting with a reactive build material or a curing agent, and which, in combination, can be jetted from ink-jet pen architecture. Optionally, the liquid vehicle can also include colorant with the reactive build material or the curing agent. A wide variety of liquid vehicles can be used with the systems and methods of the present invention. For example, such liquid vehicles can include a mixture of a variety of different agents, including, water, surfactants, organic solvents and co-solvents, buffers, biocides, sequestering agents, Viscosity modifiers, as well as soluble low molecular weight monomers, oligomers, and polymers, etc. Liquid vehicles can also be configured to include other materials, such as latex particulates or particulate polymers, for example.

Though liquid vehicles are described herein in some detail, it is not always required that a liquid vehicle be used. In some embodiments, the curing agent and/or the reactive build material can be configured to be jetted from ink-jet architecture without the use of a liquid vehicle. Alternatively, unlike the ink-jet ink image printing arts, where liquid vehicles are used that dominate the composition, with respect to embodiments of the present invention, liquid vehicle components, if used, are typically present in small amounts. This is because the use of more liquid vehicle than is necessary can tend to contaminate the object to be formed, or will have to evaporate away, thereby increasing shrinkage of the object. An example of where liquid vehicle can be added is with respect to embodiments wherein it is desired to alter the viscosity, surface tension, or the like of the reactive build material and/or the curing agent.

The term "solid three-dimensional object" or "three-dimensional object" refers to objects that are formed by the printing method of the present invention. Solid three-dimensional objects are sufficiently rigid to maintain a fixed volume and shape to an extent which is appropriate for use in three-dimensional modeling. The term can include states of the object before and after the object has completely reacted and/or dried.

"Solidifying" refers to the reactive process that occurs after contact between a reactive build material and a curing agent. A state of solidifying would include when the reactive build material and the curing agent are mixed and partially cured. Solidifying can occur from the moment of contact until the moment the reaction between the reactive build material and the curing agent is substantially complete.

"Solidifying composition" includes the state of an object or composition being formed after contact between a reactive build material and a curing agent. In accordance with the present invention, a substantially or fully solidified object is still considered to be a solidifying composition. However, when applying layer of solidifying composition upon layer of solidifying composition, a previously deposited layer of solidifying composition is typically not fully cured to provide good adhesion to a subsequently applied solidifying composition. The term "solidifying," "solidify," or the like, is not intended to imply that the resulting composition is necessarily a hard substance in the traditional sense. For example, a composition can be solidified to form a flexible solid three-dimensional object. In this example, the flexible object is more solidified than either of the two reactive components used to form the solid three-dimensional object.

"Reactive build material" or "build material" includes substances with reactive groups that can react with a curing agent to form a solidifying composition. Typically, the reactive build material provides most of the bulk of the solid three-dimensional object, as it is typically applied at a greater volume than the curing agent. Reactive build materials can include liquid vehicle admixed therewith when it is desired to alter the jettability properties, such as with respect to viscosity, surface tension, and the like. Temperature adjustment can also be used to alter the jettability properties as well.

"Curing agent" includes substances that can react with reactive groups of a reactive build material to form a solidifying composition. Curing agents can also include liquid vehicle admixed therewith, though this is not required, as long as the curing agent has desirable ink-jetting properties. Temperature adjustment can also be used to alter the jettability properties as well.

With respect to both reactive build material and curing agent, it is recognized that in certain instances, it may be difficult to determine which composition of a two part reactive system is the reactive build material and which composition is the curing agent. As long as the two parts can come together and form a solid three-dimensional object in accordance with embodiments of the present invention, this distinction is less important. However, for exemplary purposes, one can consider the reactive build material to be present at higher content in the reactive mix, and very often, to have a higher molecular weight than the curing agent.

The term "substrate" can include build platforms, removable material, and previously deposited solidifying composition layers, depending on the context. A "build platform" is typically the rigid substrate that is used to support the solid three-dimensional object and/or removable material. "Removable material" that can be used includes wax, patterned solidifying composition, water swellable gel, readily meltable material, readily soluble material, or another material that can carry the solid three-dimensional object being built, as well as be configured to be readily removed. The removable material can be applied by ink-jet pen or other depositing technique, and can be used to separate the solid three-dimensional object from the build platform, and/or can be applied to support overhanging features of the solid three-dimensional object. Previously deposited "solidifying compositions" can also be used as a substrate. To illustrate, when laying down an initial layer of a solidifying composition, the initial layer will typically be carried by a build platform or a removable material on the build platform. However, subsequent layers of solidifying composition can be deposited onto the previously deposited solidifying composition layer.

"Highly cross-linked" includes covalent and/or ionic cross-linking between molecules of reactive build material and/or curing agent upon contact. Covalent cross-linking can be preferred in some embodiments. The presence of a highly cross-linked solidifying composition can provide rigidity to a solid three-dimensional object, without the need for ultraviolet curing. Typically, by highly cross-linked, an amount of cross-linking can be present that leads to the formation of a solid three-dimensional network capable of preserving its shape upon application of subsequently applied solidifying composition layers.

"Active hydrogen" refers to an electrophilic hydrogen capable of protonating reactive groups of an epoxy in order to form a solidifying composition.

"Curing" refers to the process of solidifying to form a solid three dimensional object, and does not include ultraviolet curing unless specified.

Reference will now be made to the exemplary embodiments illustrated in the drawings, and specific language will be used herein to describe the same. It will nevertheless be understood that no limitation of the scope of the invention is thereby intended. Alterations and further modifications of the inventive features illustrated herein, and additional applications of the principles of the inventions as illustrated herein, which would occur to one skilled in the relevant art and having possession of this disclosure, are to be considered within the scope of the invention.

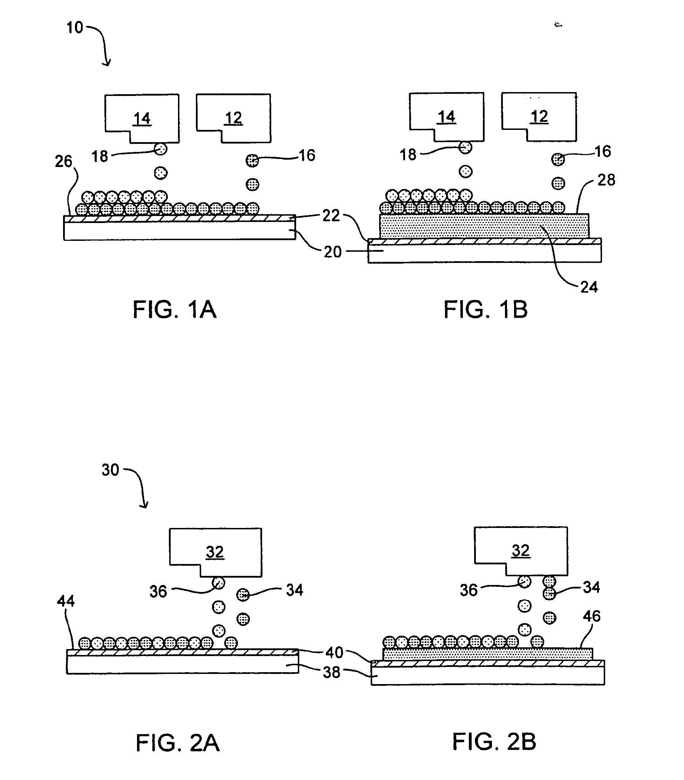

As illustrated in FIGS. 1A and 1B, a system, indicated generally at 10, in accordance with the present invention is shown. The system includes a first ink-jet pen 12 and a second ink-jet pen 14. The first ink-jet pen includes first ink-jettable composition 16 which includes a reactive build material. The second ink-jet pen includes a second ink-jettable composition 18 which includes a curing agent. Though the reactive build material is shown as underprinted with respect to the curing agent, application of the two compositions can be in the reverse. In other words, the curing agent can be underprinted with respect to the reactive build material. One or both of the first and second ink-jettable composition can include a liquid vehicle to modify the viscosity or surface tension, or alternatively, can be a composition without added liquid vehicle. In either case, the compositions are configured to be ink-jettable.

A build platform 20 is also shown that is typically rigid and can be used to support the solid three-dimensional object as it is formed. Also present is a removable material 22 that can be present to separate the solid three-dimensional object, once formed, from the build platform. The removable material can be of wax, patterned solidifying composition, water swellable gel, readily meltable material, readily soluble material, or another material of similar properties. As shown in FIG. 1A, the first ink-jettable composition 16 is deposited onto a substrate 26 provided by the removable material, followed by deposition of the second ink-jettable composition 18, thereby forming two layers that can react to become a single solidifying composition layer 24 (FIG. 1B). Once the substrate is lowered (or the ink-jet pens raised) by a distance about equal to the thickness of the solidifying composition layer, the first and second ink-jettable compositions can then be applied to a new substrate 28, which is provided by the solidifying composition.

Referring now to FIGS. 2A and 2B, a system, indicated generally at 30, in accordance with the present invention is shown. The system includes an ink-jet pen 32 configured for separately containing and jetting a first ink-jettable composition 34 and a second ink-jettable composition 36. The first ink-jettable composition can include a reactive build material. The second ink-jettable composition can include a curing agent. One or both of the first and second ink-jettable composition can include a liquid vehicle to modify the viscosity or surface tension, or alternatively, can be an essentially pure composition without added liquid vehicle. In either case, the compositions are configured to be ink-jettable.

A build platform 38 is also shown that is typically rigid and can be used to support the solid three-dimensional object as it is formed. Also present is a removable material 40 that can be present to separate the solid three-dimensional object, once formed, from the build platform. The removable material can be of wax, patterned solidifying composition, water swellable gel, readily meltable material, readily soluble material, or another material of similar properties. As shown in FIG. 2A, the first ink-jettable composition 34 is deposited onto a substrate 44 provided by the removable material, followed by deposition of the second ink-jettable composition 36 by an interleaving process. In other words, gaps in coverage provided by the first ink-jettable composition remain open to be filled by the second ink-jettable composition which forms alternating offset checkerboard layers with the first ink-jettable composition. Upon reaction, the first ink-jettable composition and the second ink-jettable composition become a partially cured solidifying composition 42, as shown in FIG. 2B. The first and second ink-jettable compositions can then be applied to a new substrate 46 which is provided by the solidifying composition.

Though a few embodiments are shown in the FIGS. regarding how to lay down reactive compositions for solid free-form fabrication in accordance with the present invention, it is recognized that other methods can also similarly be used. For example, reactive build material and curing agent can be configured to be mixed "in flight" between the head of an ink-jet pen(s) and the substrate, as would be apparent to one skilled in the art after considering the present disclosure.

With the above figures and definitions in mind, a method for free-form fabrication of a solid three-dimensional object can comprise a) ink-jetting a first ink-jettable composition containing a reactive build material and a second ink-jettable composition containing a curing agent separately onto a substrate such that contact between the reactive build material and the curing agent occurs, and thereby results in a reaction to form a solidifying composition without requiring ultraviolet curing; and b) repeating the ink-jetting step such that multiple layers of solidifying composition are accrued, wherein said multiple layers are successively bound to one another to form the solid three-dimensional object. The substrate upon which the first and second ink-jettable compositions are deposited can include a build platform of removable material such as wax, patterned solidifying composition, water swellable gel, readily meltable material, readily soluble material, or another material that can carry the solid three-dimensional object being built, as well as be configured to be readily removed. For example, in one embodiment, the build platform substrate can initially be of a removable material upon which the first and second ink-jettable compositions are deposited. Thereafter, upon repeating steps, the substrate can be the solidifying composition formed during a previous step. The first ink-jettable composition can be underprinted or overprinted with respect to the second ink-jettable composition, or the first and second ink-jettable compositions can be printed substantially simultaneously on the substrate by interleaving or by another technique.

In an alternative embodiment, a system for free-form fabrication of solid three-dimensional objects can comprise a first ink-jettable composition including a reactive build material and a second ink-jettable composition including a curing agent. The reactive build material and the curing agent can be configured to react with one another after contact to form a solidifying composition without the requirement of ultraviolet curing. The solidifying composition can be configured to become chemically bound to subsequently applied solidifying compositions. The system can further comprise an ink-jet dispensing system configured for separately containing and dispensing the first ink-jettable composition and the second ink-jettable composition, wherein upon dispensing, the first ink-jettable composition and the second ink-jettable composition are configured to come in contact.

In another embodiment, a solid three-dimensional object can comprise multiple layers of a solidifying composition bound to one another, wherein each of the multiple layers are formed by contacting a first ink-jettable composition containing a reactive build material with a second ink-jettable composition containing a curing agent. The curing agent can be configured to be reactive with the reactive build material such that the solidifying composition is formable without the requirement of ultraviolet curing.

With respect to the methods, systems, and compositions described herein, various embodiments in accordance with the present invention can be practiced. For example, a volume ratio of reactive build material to curing agent can be from 1:1 to 100:1. Additionally, once solidified, the solid three-dimensional object can be configured to exhibit mechanical properties that are desirable for three-dimensional modeling, such as exhibiting substantially no perceptible flow at room temperature.

The solid three-dimensional object can also be highly cross-linked. Both ionic or covalent cross-linking can occur to a degree such that a desired rigidity is realized, e.g., from flexible to very hard. In one embodiment, highly cross-linked denotes the formation of a solid three-dimensional network capable of preserving its shape upon application of subsequently applied layers. This being stated, if shorter chain segments are cross-linked, a strong and more brittle composition can be formed. An advantage of the present invention is that both shorter and longer chains can be used to obtain desired properties. Longer polymer chains with more cross-linking may be more desirable in circumstances where a stronger and/or more rigid article is desired. Alternatively, different materials may be chosen for use when a more flexible object is desired. For example, a polyurethane composition can be used to provide objects that have more flexible mechanical properties.

Alternatively, physical properties other than crosslinking can be present that also provide for the solid nature of a three-dimensional object, such as physical entanglement and crystalline formation. For example, many polymers obtained through free-radical polymerization and polycondensation are not chemically cross-linked. Additionally, thermoplastics are typically not crosslinked, and such materials can be used for free-form fabrication of three-dimensional objects.

In accordance with an exemplary embodiment with respect to material choice, the reactive build material can be an epoxy and the curing agent can be a substance which reacts with the epoxy group to open its epoxide ring structure(s). Examples of functional groups that can be capable of reacting with an epoxide ring in this manner are amino groups, hydroxyl groups, and carboxyl groups. In one embodiment, the reactive build material can be an epoxy and the curing agent can include molecules containing at least two active hydrogens, such as diamines, which react with the epoxy to form a solidifying composition. In one embodiment, at least six or eight active hydrogens can be present. Covalent cross-linking between epoxy molecules of the curing agent can form solid three-dimensional objects having both hard and strong mechanical properties. A bisphenol-containing epoxy resin can also be used as the reactive build material with an amine as the curing agent. Some typical amine curing agents that can be used include tetraethylene pentamine, triethylene tetramine, polyethylene polyamines, diethylene triamine, 2,2,4 trimethyl-1,6 hexanediamine, and aliphatic amines. Classes of curing agents include aliphatic amines, cycloaliphatic amines, aromatic amines, polyamines, oligoamines, polyimines, polyamides, amidoamines, dicyanamides, alcoholamines, anhydrides of carboxylic acids, carboxylic acids including dimers and trimers, and polyfunctional alcohols, to name a few. Some ethers can also be included in with an epoxy resin, such as n-butyl glycidyl ether, 1,4 butanediol diglycidyl ether, and alkyl glycidyl ether. Further, some commercial products are available with two-part chemistries of an epoxy resin and an amine curing agent such as Stycast W19 / Catalyst 9 from Emerson and Cumings; OG205 and 301 from Epo-Tek; Ren Infiltrant xi580 from Vantico; and DER 324 (epoxy resin), DER 732 (epoxy resin), DEH 29 (amine curing agent) and/or DEH 58 (amine curing agent) from Dow.

In another embodiment, the reactive build material can include a polyisocyanate and the curing agent can include a polyol for reacting with the polyisocyanate to form a solidifying composition of polyurethane. For example, the commercial product Synair Por-a-mold 2030 can be used to form a polyurethane solidifying composition in accordance with embodiments of the present invention. In other embodiments, the reactive build material can include isocyanate or polyisocyanate derivatives and the curing agent can include alcohols or polyols to form a solidifying composition.

In yet another embodiment, the reactive build material can include a functionalized silicone, such as an epoxy-functionalized silicone. The curing agent can include compositions having moieties reactive with and a functionality of the functionalized silicone and can include one or more of the curing agents described herein with respect to the epoxy reactive build materials. Alternatively, a silicone-based curing agent can also be used to react with NH and OH containing epoxies. Further, compositions having *-Si-O-* type backbones can be used and can be configured to have better flexibility than the compositions based on *-C-* bonds.

In yet another embodiment, the reactive build material can include prepolymers with unsaturated functionality and the curing agent can include free-radical curing agents such as alkyl- or aryl- peroxides or hydroperoxides. Examples of prepolymers that are functional include free-radical initiators including acrylates, multifunctional acrylates, urethane acrylates, epoxy acrylates, and silicone acrylates. Examples of curing agents can include peroxide initiators such as methyl ethyl ketone peroxide, benzoyl peroxide, acetylacetone peroxide, cumene hydroperoxide and the like.

A solution of promoters such as aromatic amines and transition metal salts at lower oxidation states can be used to generate radicals in free-radical curing agents. Examples of aromatic amines that can be used include dimethylaniline, diethylaniline, dimethylacetamide, and the like. Examples of transition metal salts that can be used include cobalt naphthenate or cobalt octoate. Amine promoters can also be used in conjunction with cobalt promoters in conjunction with certain peroxide initiators like methyl ethyl ketone peroxide, particularly when rapid curing is desirable. This embodiment can form a solidifying composition by free-radical polymerization of unsaturated prepolymers.

There are a few concepts to consider when using free-radical initiators. Free-radical initiators such as peroxides, and promoters such as amines and metal salts, should not be in the same phase before jetting, as they would react immediately upon mixing. As such, in one embodiment, the promoters can be allocated in the build material phase (unsaturated pre-polymer), and the peroxide can be jetted as the curing agent.

In accordance with another embodiment, the first and second ink-jettable compositions can each have a viscosity which is less than 70 cP at a temperature less than 200°C. Either thermal ink-jet pens or piezoelectric ink-jet pens can be used. In one embodiment, a viscosity near 15 cP has been found to be operable. As is known in the art, the viscosity of fluids can generally be lowered by increasing its temperature. As the reactive build material and the curing agent are carried by separate liquid vehicles, and as reactivity between the two compositions will not occur until contact near or on a substrate, higher temperatures can be used to modify viscosity. In other words, the use of higher temperatures can allow more viscous higher molecular weight materials to be used in the liquid vehicles, which can provide for increased toughness of the solid three-dimensional object upon cooling. In addition to the heating option, the viscosity of a fluid can also be lowered by adding low molecular weight monomers and oligomers, and/or by adding small amounts of liquid vehicle.

In addition to the reactive build material and/or curing agent, colorant can also be added to the jetting fluids in order to color the solid three-dimensional object. The colorant can include a dye(s) and/or a pigment(s). Colorants generally used in printing include black, magenta, cyan, and yellow, but other colors can also be used. Colorant can be added to a jetting fluid containing a reactive build material such as the first ink-jettable composition and/or a liquid vehicle containing a curing agent such as the second ink jettable composition. In one embodiment, a colorant can be added to at least one of the first and second ink-jettable compositions. In another embodiment, a third ink-jettable composition and a fourth ink jettable composition can be ink-jetted along with the first and second ink-jettable compositions, wherein the first ink-jettable composition further includes a cyan colorant, the third ink jettable composition includes a reactive build material and a magenta colorant, and the fourth ink-jettable composition includes a reactive build material and a yellow colorant. Alternatively, a third ink-jettable composition and a fourth ink-jettable composition can be ink-jetted along with the first and second ink-jettable compositions, wherein the second ink-jettable composition further includes a cyan colorant, the third ink jettable composition includes a curing agent and a magenta colorant, and the fourth ink-jettable composition includes a curing agent and a yellow colorant.

Several factors can influence whether colorant is added to a reactive build material and/or a curing agent. One factor can be the ratio of reactive build material to curing agent that is printed onto the substrate. Another factor includes the reactivity a colorant may have with either the reactive build material or the curing agent. For example, if the reactive build material contains epoxy rings and the colorant contains amino groups, the amino group of the colorant may react with the epoxy ring, causing prematuresoldification. In such a case, the colorant can be added to the curing agent-containing liquid vehicle.

Other embodiments may apply heat to the solidifying composition in order to accelerate curing. Ultrasonic energy can also optionally be applied to the solidifying composition to facilitate mixing of the first and second ink-jettable compositions, thereby improving contact between the reactive build material and the curing agent.

With specific respect to the liquid vehicles that can be used with the reactive build material or the curing agent, as well as optionally the colorant, one of many ingredients can be included. Examples of such ingredients include water, surfactants, organic solvents and co-solvents, buffers, biocides, sequestering agents, viscosity modifiers, as well as soluble low molecular weight monomers, oligomers, and polymers, etc. As mentioned, liquid vehicles are typically not added to carry the reactive build material and/or the curing agent, but can optionally be added to modify jetting characteristics, such as viscosity, surface tension, or other properties.

Though many of such ingredients will be discussed herein, it is important to note that not all ingredients listed are optimal for use with every particular system. For example, if a cosolvent is mentioned as being usable, it is to be understood that it is useable only to the extent that it is present in a liquid vehicle that carries a reactive build material or curing agent that is typically nonreactive with that cosolvent. For example, an amine-containing cosolvent might not be desirable for use with an epoxy reactive build material, though it would be perfectly acceptable for use with other systems.

Examples of cosolvents that can be used in the present invention include, but is not limited to, dimethylformamide, dimethylacetamide, acetone, tetrahydrofuran, dioxane, polyethylene glycol, polypropylene glycol, ethylene glycol, propylene glycol, butylene glycol, 1,2-hexanediol, triethylene glycol, 1,2,6-hexanetriol, thiodiglycol, hexylene glycol, diethylene glycol, ethylene glycol methyl ether, diethylene glycol monomethyl ether, triethylene glycol monomethyl ether, ethanol isopropyl alcohol, n-butyl alcohol, isobutyl alcohol, glycerol, n-methyl-2-pyrrolidone, 1,3-dimethylimidazolidinone, triethanolamine, sulfolane, dimethyl sulfoxide, and the like, as well as other amines, ketones, ethers, polyalkylene glycols, alkylene glycols, lower alkyl ethers of polyhydric alcohols, monohydric alcohols, and combinations thereof.

Additionally, the liquid vehicle can comprise humectants, keeping in mind that unnecessary addition of such liquids can contribute to dimensional shrinkage or distortion of formed objects if used in excess amount. On the other hand, humectants can be present to enhance the longevity of solution and solubility characteristics, which can be maintained by retention of moisture within the liquid vehicle. Keeping such a balance in mind, examples of humectants that can be used include, but are not limited to, nitrogen-containing compounds such as urea, thiourea, ethylene urea, alkylurea, alkylthiourea, dialkylurea, dialkylthiourea; sugars such as fucitol, mannitol, and inositol, and combinations thereof.

The liquid vehicle can also comprise solution characteristic modifiers such as viscosity modifiers, pH adjusters, preservatives, various types of surfactant, antioxidants, and evaporation accelerators. Examples of surfactants include primary, secondary, and tertiary amine salt compounds such as hydrochloric acid salts, acetic acid salts of laurylamine, coconut amine, stearylamine, rosin amine; quaternary ammonium salt type compounds such as lauryltrimethylammonium chloride, cetyltrimethylammonium chloride, benzyltributylammonium chloride, benzalkonium chloride, etc.; pyridinium salty type compounds such as cetylpyridinium chloride, cetylpyridinium bromide, etc.; nonionic surfactant such as polyoxyethylene alkyl ethers, polyoxyethylene alkyl esters, acetylene alcohols, acetylene glycols; and other surfactants such as 2-heptadecenyl-hydroxyethylimidazoline, dihydroxyethylstearylamine, stearyldimethylbetaine, and lauryldihydroxyethylbetaine; and combinations thereof.

pH adjusters that can be used comprise base agents such as sodium hydroxide, lithium hydroxide, sodium carbonate, ammonium carbonate ammonia sodium acetate, ammonium acetate, morpholine, monoethanolamine, diethanolamine, triethanolamine, ethylmonoethanolamine, n-butyldiethanolamine, di-n-butylethanolamine, monoisopropanolamine, diisopropanolamine, and triisopropanolamine, and the like as well as combinations thereof.

Consistent with the formulation of this invention, various other additives can be used to optimize the properties of the ink composition for specific applications. Examples of these additives are those added to inhibit the growth of harmful microorganisms. These additives may be biocides, fungicides, and other microbial agents, which are routinely used in liquid vehicle formulations. Examples of suitable microbial agents include, but are not limited to, Nuosept (Nudex, Inc.), Ucarcide (Union carbide Corp.), Vancide (R.T. Vanderbilt Co.), Proxel (ICI America), and combinations thereof.

### EXAMPLES

The following examples illustrate the embodiments of the invention that are presently best known. However, it is to be understood that the following are only exemplary or illustrative of the application of the principles of the present invention. Numerous modifications and alternative compositions, methods, and systems may be devised by those skilled in the art without departing from the spirit and scope of the present invention. The appended claims are intended to cover such modifications and arrangements. Thus, while the present invention has been described above with particularity, the following Examples provide further detail in connection with what are presently deemed to be the most practical and preferred embodiments of the invention.

### Example 1

A first ink-jettable liquid composition comprising an epoxy reactive build material resin (Stycast W19 manufactured by Emerson and Cummings) was loaded into a first piezo ink-jet pen. A second ink-jettable liquid composition comprising an amine curing agent (Catalyst 9 manufactured by Emerson and Cummings) was loaded into a second piezo ink-jet pen. Liquid vehicle was not added to the first and second ink-jettable liquid compositions. Each ink-jet pen was warmed to a temperature between 70°C and 90°C, and subsequently, jetted onto a substrate at a 100:15 volume ratio of Stycast W19 to Catalyst 9, thereby forming a solidifying composition. This process was repeated such that successive layers of solidifying composition were reacted and accrued. Once cured, about 100% of the composition was believed to have solidified to form a solid three-dimensional object.

### Example 2

The same procedure was followed as described in Example 1, except that the printed samples were deposited on a substrate that was heated to 100°C to reduce the curing time of the solidifying composition.

### Example 3

A two-part product having part number OG205 (manufactured by Epo-Tek), consisting of an epoxy resin (Part A) and an amine curing agent (Part B), were used to prepare a solid three-dimensional object in accordance with embodiments of the present invention. Both Part A and Part B were each loaded into separate piezo ink-jet pens. Each printhead of each ink-jet pen was warmed to about 90°C. After warming, Part A and Part B were printed onto a substrate at a 100:50 volume ratio of Part A to Part B, and subsequently, successive layers were printed to accrue thereon. Once cured, about 100% of the composition was believed to have solidified to form a solid three-dimensional object.

### Example 4

The same procedure was followed as described in Example 3, except that the printed samples were deposited on a substrate that was heated to 100°C to reduce the curing time of the solidifying composition.

While the present invention has been described with reference to certain preferred embodiments, those skilled in the art will appreciate that various modifications, changes, omissions, and substitutions can be made without departing from the spirit of the invention. It is to be understood that the present invention is not limited to the disclosed embodiments. The invention is intended to cover various modifications and equivalent arrangements included within the spirit and scope of the claims. Therefore, it is intended that the invention be limited only by the scope of the following claims, where the claims are to be given the broadest interpretation so as to encompass all such modifications and equivalent arrangements.

## Claims

1. A method for free-form fabrication of a solid three-dimensional object, comprising:
a) ink-jetting a first ink-jettable composition including a reactive build material and a second ink-jettable composition including a curing agent separately onto a substrate such that contact between the reactive build material and the curing agent occurs, thereby resulting in a reaction that forms a hardening composition without requiring ultraviolet curing;
b) repeating the ink-jetting step such that multiple layers of hardening composition are accrued, wherein said multiple layers are successively bound to one another to form the solid three-dimensional object.

2. A method as in claim 1, wherein the substrate is a previously deposited hardening composition.

3. A method as in claim 1, wherein the substrate of the ink-jetting step is a removable material selected from the group consisting of wax, patterned hardening composition, water swellable gel, readily meltable material, readily soluble material, and wherein the substrate of each of the successive repeating steps includes a previously deposited hardening composition.

4. A method as in claim 1, wherein first ink-jettable composition is underprinted with respect to the second ink-jettable composition.

5. A method as in claim 1, wherein first ink-jettable composition is overprinted with respect to the second ink-jettable composition.

6. A method as in claim 1, wherein the first ink-jettable composition and the second ink-jettable composition are printed substantially simultaneously on the substrate.

7. A method as in claim 1, further comprising the step of adding a colorant to at least one of the first ink jettable composition and the second ink-jettable composition.

8. A system for free-form fabrication of solid three-dimensional objects, comprising a first ink-jettable composition including a reactive build material and a second ink-jettable composition including a curing agent, said reactive build material and said curing agent being configured to react with one another after contact to form a hardening composition without the requirement of ultraviolet curing, said hardening composition being configured to become chemically bound to subsequently applied hardening compositions; and
an ink-jet dispensing system configured for separately containing and dispensing the first ink-jettable composition and the second ink-jettable composition, wherein upon dispensing, the first ink-jettable composition and the second ink-jettable composition are configured to come in contact.

9. A system as in claim 8, wherein the reactive build material is an epoxy, and the curing agent includes molecules having at least two active hydrogens for reacting with the epoxy to form the hardening composition.

10. A system as in claim 8, wherein the reactive build material includes an isocyanate or polyisocyanate, and the curing agent includes an alcohol or polyol.

11. A system as in claim 8, wherein the reactive build material includes a functionalized silicone, and the curing agent is configured to react with the functional group on the silicone.

12. A system as in claim 8, wherein the reactive build material includes a norbornene, and the curing agent includes a cationic metallic catalyst.

13. A system as in claim 8, wherein the first ink-jettable composition and the second ink-jettable composition each have a viscosity which is less than 70 cP at a temperature less than 200°C.

14. A system as in claim 8, wherein at least one of the first ink-jettable composition and the second ink-jettable composition includes a colorant.

15. A system as in claim 8, further comprising a third ink-jettable composition and a fourth ink-jettable composition, wherein the first ink-jettable composition further includes a cyan colorant, the third ink-jettable composition includes a reactive build material and a magenta colorant, and the fourth ink-jettable composition includes a reactive build material and a yellow colorant.

16. A system as in claim 8, further comprising a third ink-jettable composition and a fourth ink-jettable composition, wherein the second ink-jettable composition further includes a cyan colorant, the third ink-jettable composition includes a curing agent and a magenta colorant, and the fourth ink-jettable composition includes a curing agent and a yellow colorant.

17. A solid three-dimensional object prepared in accordance with the method of one of claims 1 to 7.

18. A solid three-dimensional object prepared using the system of one of claims 8 to 16.
